(19) Europäisches Patentamt
European Patent Office
Office européen des brevets

(11) **EP 4 495 821 A1**

(12) **EUROPEAN PATENT APPLICATION**

(43) Date of publication:
**22.01.2025 Bulletin 2025/04**

(21) Application number: **24188638.1**

(22) Date of filing: **15.07.2024**

(51) International Patent Classification (IPC):
**G06F 30/27** (2020.01)     G06F 119/06 (2020.01)

(52) Cooperative Patent Classification (CPC):
**G06F 30/27; G06N 3/08;** G06F 2119/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.07.2023 US 202363513902 P
10.07.2024 US 202418768459**

(71) Applicant: **MediaTek Inc.**
 **30078 Hsinchu City (TW)**

(72) Inventors:
• **CHEN, Chieh-Wen**
  **Hsinchu City (TW)**
• **WANG, Yao-Sheng**
  **Hsinchu City (TW)**
• **LO, Yu-Cheng**
  **Hsinchu City (TW)**
• **YU, Wei-Ling**
  **Hsinchu City (TW)**

(74) Representative: **Hoefer & Partner Patentanwälte mbB**
  **Pilgersheimer Straße 20**
  **81543 München (DE)**

Remarks:
If details are not fully discernible, that is due to the quality of the drawings filed by the applicant.

(54) **MACHINE LEARNING ASSISTED FRAMEWORK FOR ON-OR-OFF CHIP POWER MODEL ESTABLISHMENT**

(57)     A computing device collects a plurality of data samples. Each data sample represents a signal activity of a plurality of signals of the chip. The computing device selects a subset of signals from the plurality of signals as proxies. These proxies are correlated with an actual power consumption of the chip according to a criterion. The computing device trains the power model using signal activities of the plurality of signals as inputs and the actual power consumption as an output. The computing device fine-tunes coefficients of the proxies in the power model. This fine-tuning adjusts an estimation error between an estimated power consumption output by the power model and the actual power consumption.

FIG. 1

## Description

### CROSS-REFERENCE TO RELATED APPLICATION(S)

This application claims the benefits of U.S. Provisional Application Serial No. 63/513,902, entitled "MACHINE LEARNING ASSISTED FRAMEWORK FOR ON-OR-OFF CHIP POWER MODEL ESTABLISHMENT" and filed on July 17, 2023, which is expressly incorporated by reference herein in their entirety.

### BACKGROUND

#### Field

The present disclosure relates generally to power modeling and estimation for integrated circuits, and more particularly, to techniques of accelerating data collection and training processes for on-or-off chip power model establishment using machine learning.

#### Background

Various techniques and technologies have been used for power modeling and estimation in chip design. These methods aimed to predict the power consumption of a chip based on its design and activity, enabling designers to optimize power efficiency and provide reliable operation within power constraints.

One common approach for power modeling was to use simulation-based methods. These methods involved simulating the chip design at various levels of abstraction, such as register-transfer level (RTL) or gate-level, and estimating power consumption based on the switching activity of the circuit elements. However, simulation-based methods were time-consuming and computationally expensive, especially for large and complex chip designs. The process of generating power reports using tools like PrimeTime PX (PTPX) could take several hours for even a small time interval, making it impractical for comprehensive power analysis.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. A method, an apparatus, and a computer-readable medium according to the invention are defined in the independent claims. The dependent claims define preferred embodiments thereof.

In an aspect of the disclosure, a method, a computer-readable medium, and an apparatus are provided. The apparatus may be a computing device. The computing device collects a plurality of data samples. Each data sample represents a signal activity of a plurality of signals of the chip. The computing device selects a subset of signals from the plurality of signals as proxies. These proxies are correlated with an actual power consumption of the chip according to a criterion. The computing device trains the power model using signal activities of the plurality of signals as inputs and the actual power consumption as an output. The computing device fine-tunes coefficients of the proxies in the power model. This fine-tuning adjusts an estimation error between an estimated power consumption output by the power model and the actual power consumption.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating a schematic for on-or-off chip power model establishment.
FIG. 2 is a diagram illustrating frameworks for generating power reports of a chip.
FIG. 3 is a diagram illustrating a proposed power model framework.
FIG. 4(A) is a flowchart illustrating a procedure for creating an orthogonal minimum dataset for training a power model.

FIG. 4(B) is a diagram illustrating the orthogonal minimum dataset.

FIG. 5 is a diagram illustrating another procedure for creating an orthogonal minimum dataset for training a power model.

FIG. 6 is a flowchart illustrating a procedure for implementing similarity filtering to preprocess the training data for the power model.

FIG. 7(A) shows the power consumption patterns in the dataset before similarity filtering.

FIG. 7(B) shows the power consumption patterns in the dataset after similarity filtering.

FIG. 8 illustrates multiple proxy layouts that show a bottom-up strategy for proxy selection.

FIG. 9 is a diagram illustrating a procedure for proxy selection using the PICASSO library.

FIG. 10(A) is a diagram illustrating a first type of process for proxy selection and fine-tuning.

FIG. 10(B) illustrates a second type of process for proxy selection and fine-tuning.

FIG. 11(A) is a diagram illustrating a first type of process for proxy selection and coefficient fine-tuning using a regularization path method.

FIG. 11(B) illustrates a second type of process for proxy selection and coefficient fine-tuning using the regularization path method.

FIG. 12 is a flow chart of a process (method) for quantizing the power model to reduce hardware cost for implementing the on-chip power model.

FIG. 13 is a diagram illustrating an example of a hardware implementation for an apparatus employing a processing system.

## DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

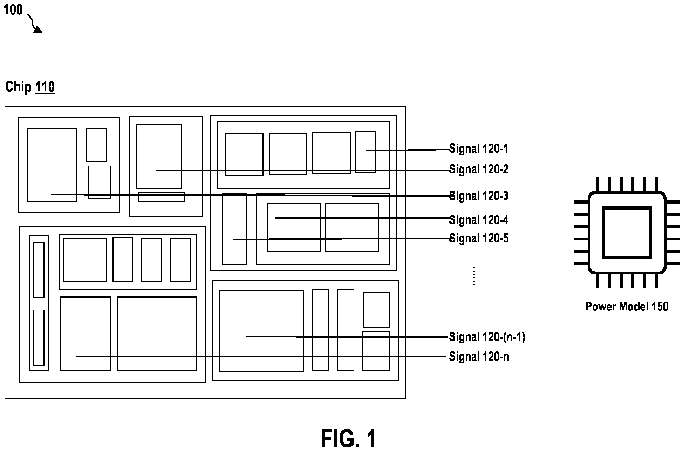

FIG. 1 is a diagram 100 illustrating a schematic for on-or-off chip power model establishment. The chip 110 includes a plurality of internal circuit components that consume power when operating. The power consumption of the chip 110 varies with the workload performed by the chip 110. The on-chip power of the chip 110 are measured to generate signals 120-1, 120-2, ... 120-n, which reflect the power consumption of different components within the chip 110. The signals 120-1, 120-2, ... 120-n are input into a power model 150 to establish a power model.

The power model 150 can estimate the power consumption of the chip 110 based on the signals 120-1, 120-2, ... 120-n. The signals 120-1, 120-2, ... 120-n can represent the activity of a subset of signals within the chip 110. The signals 120-1, 120-2, ... 120-n are selected to reduce the hardware overhead of the power model 150. The signal activity can include $T_0$, $T_1$, and $TC$ signals, where $T_0$ represents the duration when a signal is at low voltage level, $T_1$ represents the duration when a signal is at high voltage level, and $TC$ represents the toggle count of a signal. More specifically, a toggle count (TC) refers to the number of times a signal switches between low voltage level and high voltage level, or vice versa. In other words, it represents the number of transitions a signal makes between its two states.

The power model 150 can be implemented in software and executed on a computer, or it can be implemented in hardware and integrated into the chip 110. The power model 150 can be used to monitor the power consumption of the chip 110 during runtime, or it can be used to estimate the power consumption of the chip 110 during design time.

The power model 150 can be trained using a machine learning algorithm. A plurality of data samples is collected to train the power model 150. Each data sample includes the values of the signals 120-1, 120-2, ... 120-n, and the corresponding power consumption of the chip 110.

The training configuration of the power model 150 can include two stages. In the first stage, a subset of signals is selected as proxies. The proxies are the signals that are most correlated with the power consumption of the chip 110. In the second stage, the coefficients of the proxies are fine-tuned to precisely predict the dynamic power consumption of the chip 110.

The dynamic power consumption of the chip 110 can be expressed as a function of the signal activities and the coefficients of the proxies, which can be represented using the following equation:

$$Dynamic\ power = F(Signal\_Activity; \theta)$$

where $\theta$ represents the coefficients of the proxies, which are learned by an AI algorithm.

The power model 150 can be used to accelerate the power estimation process, to reduce the hardware cost of on-chip power meters, and to enable energy efficiency optimization techniques such as Dynamic Voltage and Frequency Scaling (DVFS).

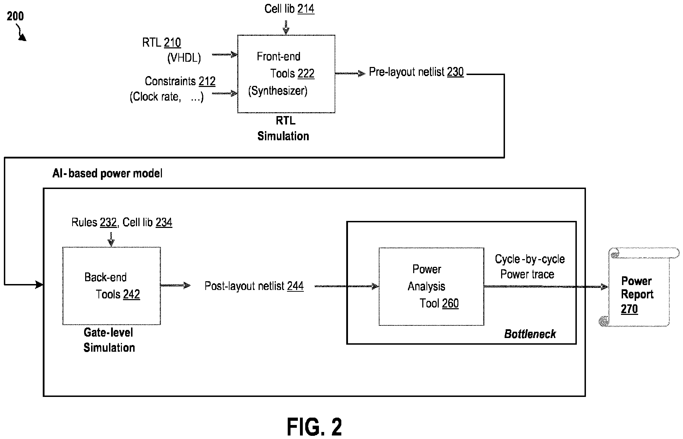

FIG. 2 is a diagram 200 illustrating frameworks for generating power reports of a chip. In a first framework, a Register-Transfer Level (RTL) description 210 of the design of the chip, along with design constraints 212 such as clock rate, is fed into the front-end tools 222, which include a synthesizer. The front-end tools 222 also take a cell library 214 as input. The RTL description 210 may be written in a hardware description language such as VHDL.

The front-end tools 222 perform RTL simulation and synthesis to generate a pre-layout netlist 230. The pre-layout netlist 230 is an idealized representation of the design and does not include the clock tree. The pre-layout netlist 230, along with design rules 232 and the cell library 234, is then fed into the back-end tools 242 for gate-level simulation.

The back-end tools 242 generate a post-layout netlist 244, which is a more realistic representation of the actual chip activity, including the clock tree, delay, and glitches. The post-layout netlist 244 is then input to the power analysis tool 260, which performs a cycle-by-cycle power trace to generate a detailed power report 270.

The power report 270 contains a cycle-by-cycle breakdown of power consumption for a given chip design. For instance, the power report 270 may include a power trace that details the exact power usage for each clock cycle within the analyzed timeframe. The power report 270 may contain total power consumption. The report aggregates the cycle-by-cycle data to provide the overall power consumed during the analyzed period (e.g., for a specific workload or pattern). The power report 270 may contain breakdown by power domain/components. The report shows power consumption by different functional blocks or power domains within the chip. The power report 270 may include statistical measures of the power data, such as average power, peak power, and power distribution.

The process of generating the power report 270 using the power analysis tool 260 can be time-consuming. For example, it may take 5.5 hours to generate the power trace for just a 1 $\mu$s time interval. This becomes a bottleneck in the power estimation process, especially when multiple patterns need to be tested.

To address this problem, in a second framework, the AI-based power model 150 can be used to replace the time-consuming power analysis step. As shown in FIG. 2, the power model 150 takes the pre-layout netlist 230 as input, selects a subset of signals that are most correlated with power consumption, and fine-tunes the coefficients of these signals to estimate the power consumption. This can significantly reduce the time required to generate power estimates compared to the traditional flow using the power analysis tool 260.

The power model 150 can be implemented on-chip to enable real-time power monitoring and optimization techniques such as DVFS. By providing runtime power information, the on-chip power model allows the system to dynamically adjust the voltage and frequency based on the current power consumption, thereby improving energy efficiency.

Power models are used to estimate the power consumption of chips. There are two main types of power models: off-chip power models and on-chip power models. Off-chip power models are used to estimate the power consumption of chips during design time. On-chip power models are used to monitor the power consumption of chips during runtime. The process of training a power model for a chip design faces several challenges that can impact the efficiency and accuracy of the model. Two key challenges are the time-consuming data collection process and the bottleneck in proxy selection time.

Collecting training data for the power model is a time-consuming process. As mentioned earlier, generating an accurate power report using the power analysis tool 260 can take a significant amount of time. For example, it may take 5.5 hours to generate a power trace for just a 1 $\mu$s time interval using the PrimeTime PX (PTPX) tool for RTL sign-off. This becomes a bottleneck in the data collection flow, especially when collecting training data that covers the full range of power intervals.

To train the power model 150, data samples that include both the signal activities and their corresponding power consumption values need to be collected. The power consumption values are obtained from the power report 270 generated by the power analysis tool 260. However, the time required to generate these power reports for multiple patterns and time intervals can be prohibitively long.

For instance, consider a scenario where a power model for a GPU is trained. The GPU may have different power consumption levels, such as low, medium, and high, depending on the workload. Training data that covers the full range of power intervals need to be collected. This requires running various patterns on the GPU and generating power reports for each pattern, which can be extremely time-consuming.

Another challenge in training the power model 150 is the bottleneck in proxy selection time. As mentioned earlier, the first step in the training configuration is to select a subset of signals that are most correlated with the power consumption of the chip. These selected signals are called proxies.

However, the process of selecting proxies becomes a bottleneck in the training time, especially for large chip designs. In practice, mobile chips can have more than 10 million signals. Selecting the most relevant proxies from such a large number of signals is computationally expensive and time-consuming.

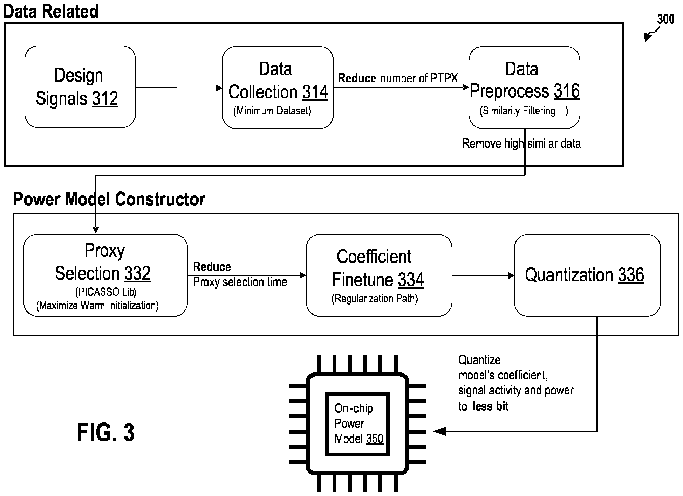

FIG. 3 is a diagram illustrating a proposed power model framework 300. The framework 300 includes two main parts: data-related components and power model constructor components. The framework aims to reduce the time required for data collection and model training.

The data-related components include a data collection component 314 and a data preprocess component 316. Design signals 312, which are the raw data signals from the hardware design, are fed into the data collection component 314. The data collection component 314 employs a minimum dataset method to reduce the number of PTPX (PrimeTime PX) power reports that need to be collected, thereby reducing the data collection time. The collected data is then passed to the data preprocess component 316, which applies a similarity filtering method to remove highly similar data points. This step not only accelerates the training time by reducing the amount of training data but also enhances the model's ability to learn from diverse data points rather than repetitive, similar data.

The power model constructor components include a proxy selection component 332, a coefficient finetune component 334, and a quantization component 336. The preprocessed data is fed into the proxy selection component 332, which utilizes the PICASSO library to select a subset of signals that are most correlated with power consumption from the large number of signals (e.g., 10 million signals) in the hardware design. The PICASSO library is described in Zhao, T., Liu, H., & Zhang, T. (2017); Pathwise coordinate optimization for sparse learning: Algorithm and theory; arXiv: 1412.7477, 9 Feb 2017, which is expressly incorporated by reference herein in its entirety. The PICASSO library employs various techniques to accelerate the proxy selection process, which will be discussed in detail later. Additionally, the proxy selection component 332 applies a maximize warm initialization method to further optimize the selection process.

The selected proxies are then passed to the coefficient finetune component 334, which fine-tunes the coefficients of each selected signal to precisely predict the dynamic power consumption. The coefficient finetune component 334 also employs a regularization path method to accelerate the fine-tuning process.

The quantization component 336 quantizes the model's coefficients, signal activities, and power values to fewer bits to reduce the hardware cost of the on-chip power model 350. The quantization is performed not only on the model coefficients but also on the input signal activities and output power values.

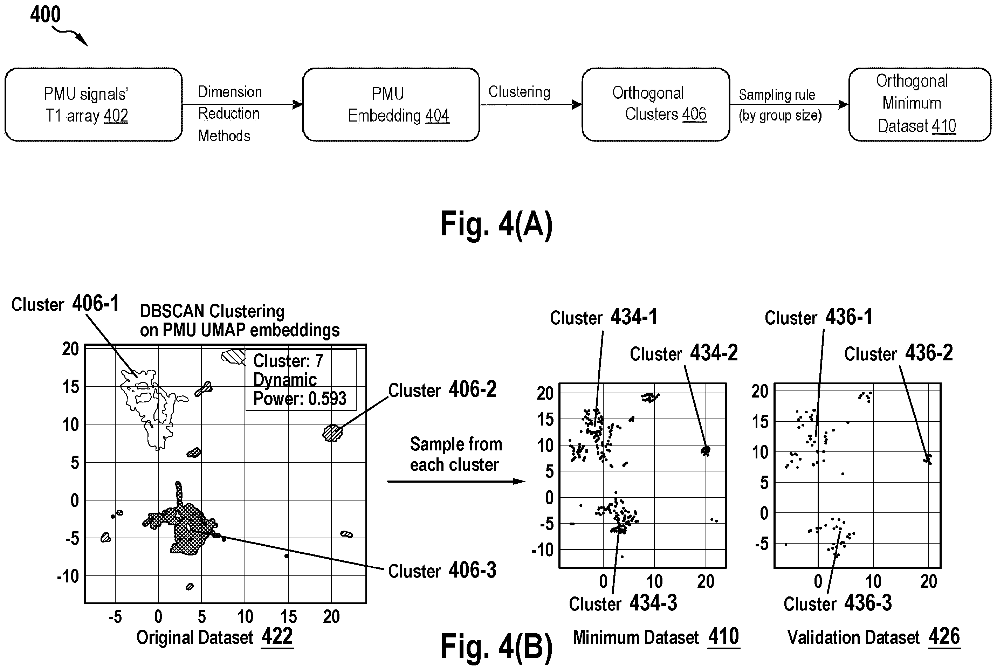

FIG. 4(A) is a flowchart illustrating a procedure 400 for creating an orthogonal minimum dataset 410 for training a power model 150. FIG. 4(B) is a diagram illustrating the orthogonal minimum dataset 410.

The data collection component 314 obtains a plurality of PMU (Performance Monitoring Unit) signals' $T_1$ array 402 from the design signals 312. Each PMU signal's $T_1$ array represents the duration when the PMU signal is at high voltage level. A PMU is a hardware unit that integrates performance counters. A performance counter is a register that counts the number of times a particular event occurs. The events that are counted by the performance counters can vary depending on the chip. For example, some performance counters may count the number of clock cycles, while others may count the number of instructions executed. The performance counters can be used to measure the activity of the chip. The activity of the chip is related to the power consumption of the chip. The PMU signals can therefore be used to estimate the power consumption of the chip.

The data collection component 314 applies a dimension reduction method to the plurality of PMU signals' $T_1$ array 402 to obtain a plurality of PMU embeddings 404. The data collection component 314 applies a clustering method to the plurality of PMU embeddings 404 to obtain orthogonal clusters 406. The data collection component 314 applies a sampling rule, such as a sampling rule based on group size, to the orthogonal clusters 406 to obtain the orthogonal minimum dataset 410.

The dimension reduction and clustering operations are performed using techniques such as UMAP (Uniform Manifold Approximation and Projection) for dimension reduction and DBSCAN (Density-Based Spatial Clustering of Applications with Noise) for clustering. These techniques are applied sequentially, with dimension reduction performed first to transform the high-dimensional PMU signals' $T_1$ array into a lower-dimensional space (e.g., 2D), followed by clustering to group similar data points based on their distribution in the lower-dimensional space.

As illustrated in FIG. 4(B), the original dataset 422 contains orthogonal clusters 406-1, 406-2, 406-3, etc. Selected data from the original dataset 422 forms the orthogonal minimum dataset 410 and a validation dataset 426. The orthogonal minimum dataset 410 contains clusters 434-1, 434-2, 434-3, etc. The validation dataset 426 contains clusters 436-1, 436-2, 436-3, etc.

The data collection component 314 can determine the group size for the orthogonal minimum dataset 410 and the validation dataset 426. For example, if the cluster 406-1 constitutes 30% of the original dataset 422, and the cluster 406-1 needs to be reduced by 50% for the orthogonal minimum dataset 410, the data collection component 314 can randomly select 30% * 50% of the data points from the original dataset 422. These selected data points will then be shown as cluster 434-1.

The orthogonal minimum dataset 410 can be used to train the power model 150. The orthogonal minimum dataset 410 is smaller than the original dataset 422. This can reduce the time required to train the power model 150.

The process uses the PMU signals' $T_1$ array 402 to cluster data and then sample by group size from each cluster to create the orthogonal minimum dataset 410. The orthogonal minimum dataset 410 is diverse and covers the full range of power intervals. In certain scenarios, this process may reduce the number of data points to be collected by up to 93%.

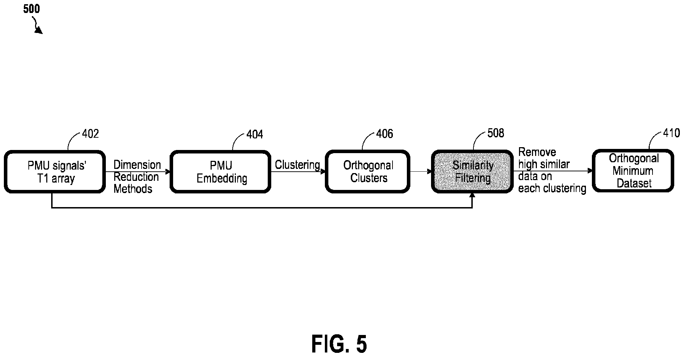

FIG. 5 is a diagram 500 illustrating another procedure for creating an orthogonal minimum dataset 410 for training a power model 150. This procedure includes performing similarity filtering 508 on the orthogonal clusters 406 to remove highly similar data points within each cluster, providing further diversity of the minimum dataset.

The data collection component 314 obtains PMU signals' $T_1$ array 402. The data collection component 314 applies a dimension reduction method to the plurality of PMU signals' $T_1$ array 402 to obtain a plurality of PMU embeddings 404. The data collection component 314 then applies a clustering method to the plurality of PMU embeddings 404 to obtain orthogonal clusters 406. Further, the data collection component 314 applies a sampling rule to the orthogonal clusters 406 to obtain sampled data points.

The data collection component 314 then performs similarity filtering 508 on the orthogonal clusters 406. The data collection component 314 calculates a similarity between every pair of sampled data points within each cluster 406. For each pair of sampled data points, the data collection component 314 concatenates the PMU signal's $T_1$ array for each sampled data point into a 1D array. The data collection component 314 then calculates the similarity between the two 1D arrays. If the similarity between the two 1D arrays is above a threshold, the data collection component 314 removes one of the two sampled data points.

The combination of the minimum dataset method and similarity filtering results in a smaller and diverse dataset for training the power model 150. This reduces the training time and improves the model's generalization capability by preventing it from being biased toward highly similar data points.

The data within each cluster is more orthogonal, meaning that the data points within each cluster are more independent of each other. This can further improve the model's performance by reducing the correlation between the input features.

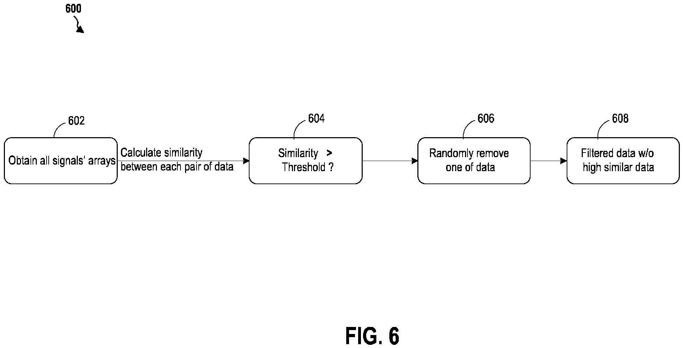

FIG. 6 is a flowchart 600 illustrating a procedure for implementing similarity filtering to preprocess the training data for the power model 150. The procedure aims to filter out highly similar data points to enhance the model's generalization capability and accelerate the training process.

In operation 602, the data preprocess component 316 obtains all signals' arrays from the collected data. Each signal array represents the activity of a signal within the hardware design.

In operation 604, the data preprocess component 316 calculates the similarity between each pair of data points. For each pair of data points, the corresponding signal scalars are concatenated into 1D arrays. The similarity between the two 1D arrays is then calculated. The similarity measure can be based on various metrics, such as cosine similarity or Euclidean distance.

In operation 606, the data preprocess component 316 checks if the similarity between the two 1D arrays exceeds a predefined threshold. If the similarity is greater than the threshold, one of the two data points is randomly removed. As such, highly similar data points are filtered out, reducing redundancy in the training data.

In operation 608, the data preprocess component 316 obtains the filtered data without high similar data points. The filtered data is more diverse and contains less redundancy, which can improve the efficiency and effectiveness of the power model 150 training process.

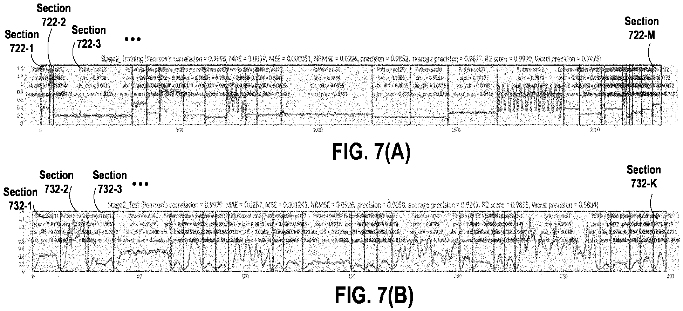

FIG. 7(A) and FIG. 7(B) are diagrams illustrating the impact of similarity filtering on the training and test datasets, respectively. These diagrams show the power consumption patterns before and after applying similarity filtering.

FIG. 7(A) shows the power consumption patterns in the dataset before similarity filtering. The horizontal axis represents the data points, and the vertical axis represents the power consumption in watts. Sections 722-1, 722-2, ..., 722-M represent different patterns in the training dataset. Each pattern corresponds to a specific workload or activity performed by the chip.

Before similarity filtering, the power consumption patterns contain many flat regions, indicating highly similar data points. These flat regions can bias the power model's learning process, leading to overfitting and poor generalization.

FIG. 7(B) shows the power consumption patterns in the dataset after similarity filtering. Similar to FIG. 7(A), the horizontal axis represents the data points, and the vertical axis represents the power consumption in watts. Sections 732-1, 732-2, ..., 732-K represent different patterns in the test dataset.

After applying similarity filtering, the flat regions are reduced, resulting in more diverse and independent data points in the test dataset. This improves the power model's performance on unseen data, leading to better accuracy and robustness.

The similarity filtering process is quantified in the table below:

*Impact of Similarity Filtering on Training Data*

| Similarity Threshold | Original Num. of SAIF | Filtered Num. of SAIF | Similarity Filtering Run Time |
|---|---|---|---|
| 0.99 | 4597 | 617 | 4 min |

The table shows that with a similarity threshold of 0.99, the original number of SAIF (Switching Activity Interchange Format) files is reduced from 4597 to 617, significantly decreasing the training data size. The similarity filtering process takes only 4 minutes, demonstrating its efficiency.

By implementing similarity filtering, in certain scenarios, the training time for the power model is accelerated by 26.3 times. This substantial reduction in training time may be achieved without compromising the model's accuracy. In fact, removing highly similar data points enhances the power model's generalization, leading to better performance on both training and test datasets.

The similarity filtering process described in FIG. 6 and illustrated in FIG. 7(A) and FIG. 7(B) addresses the challenge of redundant and highly similar data points in the training dataset. By filtering out these data points, the power model training process becomes more efficient and effective.

The filtered data is more diverse and contains less redundancy, which prevents the power model from being biased toward repetitive data points. This enhances the model's ability to generalize to unseen data, improving its accuracy and robustness.

The similarity filtering process may be implemented in the data preprocess component 316 of the proposed power model framework 302. The similarity filtering process works in conjunction with other components, such as the data collection component 314 and the power model constructor components, to reduce the time required for data collection and model training.

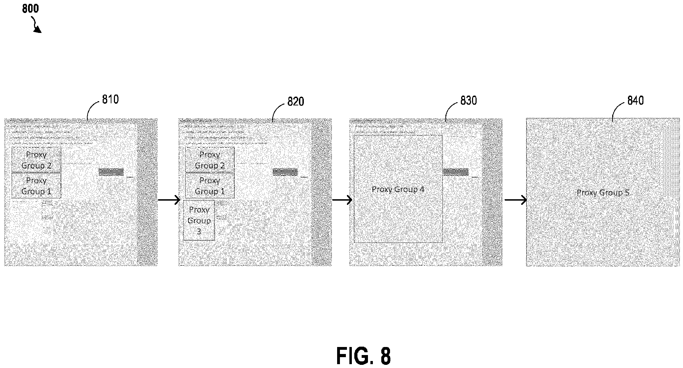

FIG. 8 illustrates multiple proxy layouts 810, 820, 830, 840 that show a bottom-up strategy for proxy selection employed by the proxy selection component 332. The proxy selection algorithm faces challenges in both memory usage and speed when selecting proxies from large-scale designs of mobile chips, which can contain over 10 million signals. The bottom-up strategy enables the proxy selection component 332 to handle the entirety of these large-scale designs within a single on-chip power model (OPM) while simultaneously reducing memory usage and execution time.

The bottom-up method sequentially selects proxies and propagates the selections to the next level until the entire design is processed. The proxy layout 810 shows the initial stage of the bottom-up strategy. The design hierarchy is represented by nested rectangles, with the outermost rectangle corresponding to the top-level module. Each level in the hierarchy contains a group of signals, with deeper levels representing smaller modules with fewer signals.

The proxy selection component 332 starts the proxy selection process from the deepest level of the hierarchy and works its way up to the top level. In the proxy layout 810, the proxy selection component 332 first selects proxies from group 1 and group 2, which are the deepest level modules. Each proxy group contains a subset of signals that are most correlated with power consumption within their respective hierarchy levels. The selected proxies from these groups are then combined with all the signals from the next level up, group 3, to perform another round of proxy selection, as shown in the proxy layout 820.

After this round of selection, the proxy selection component 332 obtains the selected proxies from group 2, group 1, and group 3. These selected proxies are then combined with the signals from the surrounding levels to form group 4, as shown in the proxy layout 830. This process continues iteratively until the entire design is processed and the final set of proxies is selected, as depicted in the proxy layout 840.

The proxy layout 840 represents the final stage of the bottom-up strategy. In this layout, all previously selected proxies are combined into a single group, Proxy Group 5. The proxy selection component 332 selects the final set of proxies from this group. This final set of proxies represents the most relevant signals for estimating the power consumption of the entire design.

As such, the proxy selection component 332 does not need to process all the signals in the design simultaneously. Instead, it only needs to consider the selected proxies from the lower-level groups and the signals from the current level being processed. This approach significantly reduces memory usage and speeds up the proxy selection process, as the proxy selection component 332 can work with a smaller subset of signals at each iteration.

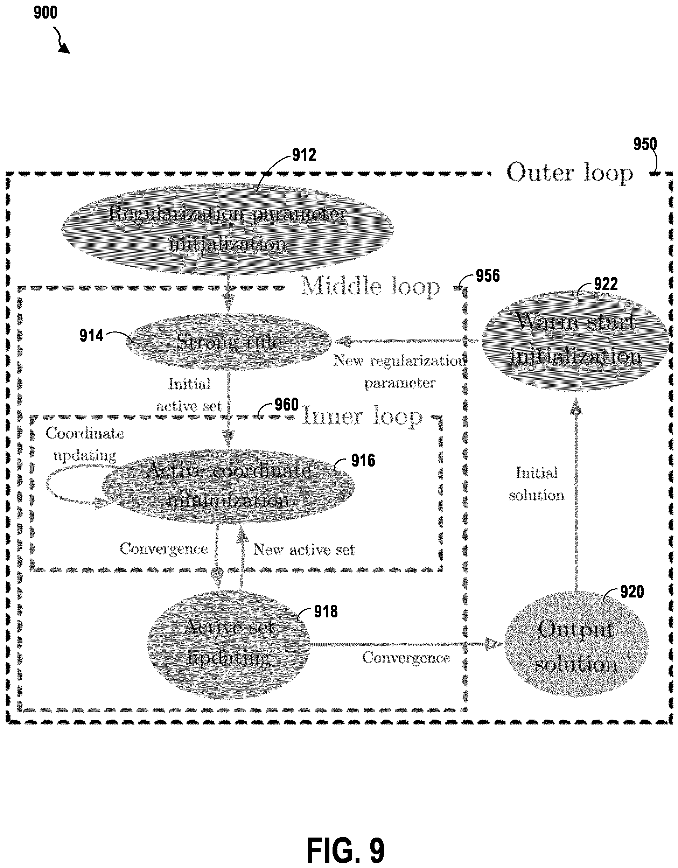

FIG. 9 is a diagram 900 illustrating a procedure for proxy selection using the PICASSO library. The PICASSO library utilizes a path-wise coordinate optimization algorithm to reduce the proxy selection time. The procedure includes an outer loop 950, a middle loop 956, and an inner loop 960.

In operation 912, the proxy selection component 332 initializes a regularization parameter A. The regularization parameter $\lambda$ is used to control the sparsity of the solution. A larger value of $\lambda$ encourages a sparser solution, meaning that fewer proxies are selected.

The middle loop 956 includes operations 914, 916, and 918. In operation 914, the proxy selection component 332 applies a strong rule to preselect coordinates. The strong rule includes calculating the gradient for each coordinate and comparing it to a threshold. If the absolute value of the gradient is greater than the threshold, the coordinate is included in the active set; otherwise, it is excluded from the active set. The active set includes the coordinates that are most likely to be relevant for predicting power consumption. The inactive set includes the coordinates that are less likely to be relevant for predicting power consumption.

The inner loop 960 includes operation 916. In operation 916, the proxy selection component 332 performs active coordinate minimization over the active set. Active coordinate minimization is a technique that iteratively updates the values of the coordinates in the active set until the objective function is minimized.

In operation 918, the proxy selection component 332 updates the active set. The active set is updated by adding coordinates from the inactive set that have a large absolute gradient value. As such, the active set contains the coordinates that are most likely to be relevant for predicting power consumption.

The middle loop 956 (operations 914, 916, and 918) repeats until a convergence criterion is met. The convergence criterion may be based on the change in the objective function value or the change in the active set. Once the convergence criterion is met, the output solution 920 is obtained.

The outer loop 950 includes operations 920 and 922. In operation 920, the proxy selection component 332 outputs the solution.

In operation 922, the proxy selection component 332 performs warm start initialization, in which the proxy selection component 332 uses the solution from the previous iteration as the starting point for the current iteration. This helps to accelerate the convergence of the algorithm, as the algorithm does not need to start from scratch at each iteration. The proxy selection component 332 initializes a new regularization parameter $\lambda$. For example, the proxy selection component 332 may decrease the regularization parameter $\lambda$ to encourage the selection of more proxies.

The outer loop 950 (operations 920 and 922) repeats until all regularization parameters are processed. Once all regularization parameters are processed, the proxy selection component 332 has selected a set of proxies for the power model 150.

The PICASSO algorithm starts with large regularization parameters to suppress the overselection of irrelevant coordinates. Gradually, the PICASSO algorithm recovers the relevant coordinates to attain a sparse output solution with optimal statistical properties in parameter estimation and support recovery.

The PICASSO library includes the below features: active coordinate minimization, strong rule, active set updating, and warm start initialization.

Active coordinate minimization involves performing coordinate minimization only over the coordinates in the active set. This eliminates the need to calculate the gradient vector for all coordinates.

The strong rule is used to preselect coordinates for the active set. This involves calculating the gradient for each coordinate and comparing it to a threshold. If the absolute value of the gradient for a coordinate is greater than the threshold, the coordinate is included in the active set; otherwise, it is included in the inactive set.

Active set updating involves adding the coordinate with the largest absolute gradient value at each iteration to the active set.

Warm start initialization involves using the solution from the previous stage as the initialization for the current stage. This accelerates the convergence of the algorithm.

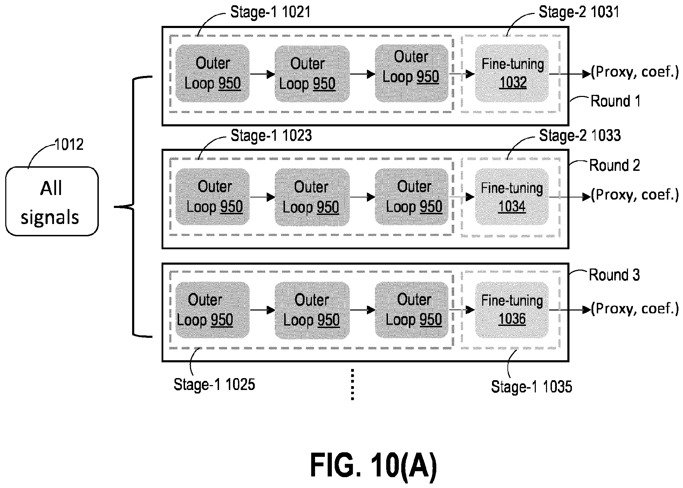

FIG. 10(A) is a diagram illustrating a first type of process for proxy selection and fine-tuning. The process involves multiple rounds of training, where each round includes two stages: stage-1 (proxy selection) and stage-2 (fine-tuning).

In round 1, all signals 1012 are fed into an outer loop 950 (initial one) in stage-1 1021 from scratch. This outer loop 950 is the bottleneck of the training time as it does not have any prior results to use. After the initial outer loop 950, subsequent outer loops are performed. The selected proxies and their coefficients are then passed to stage-2 1031 for fine-tuning operations 1032. The output of round 1 is a set of proxies and their corresponding coefficients.

In round 2, the process starts again with an initial outer loop 950 in stage-1 1023 from scratch, followed by subsequent outer loops and fine-tuning in stage-2 1033. The output of round 2 is another set of proxies and coefficients.

Similarly, round 3 begins with an initial outer loop 950 in stage-1 1025, followed by subsequent outer loops and fine-tuning in stage-2 1035. The output of round 3 is yet another set of proxies and coefficients.

In this process, each round starts with an initial outer loop, which is time-consuming and results in multiple bottlenecks throughout the training process.

In each round, stage-1 1021, 1023, 1025 applies the PICASSO library to select proxies from the input signals. The initial outer loop 950 is the bottleneck of the training time, when there are no results from the previous round. Subsequent outer loops in the same round are faster as they are based on the results from the previous round. Stage 2 (1031, 1033, 1035) then fine-tunes the coefficients of the selected proxies.

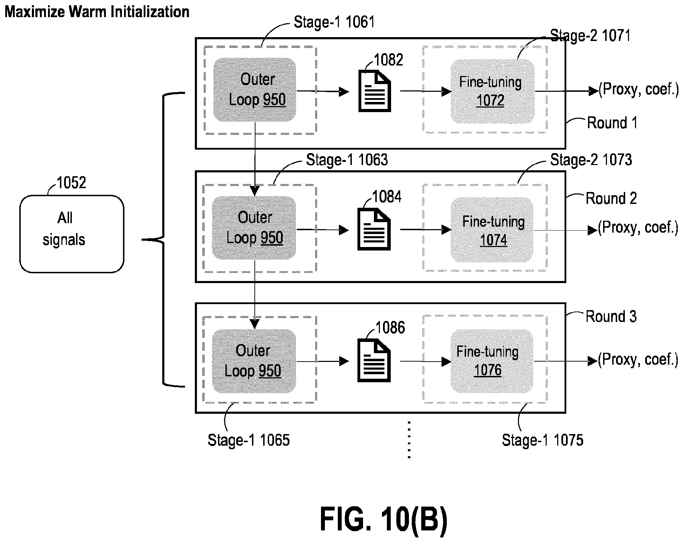

FIG. 10(B) illustrates a second type of process for proxy selection and fine-tuning. This process utilizes a maximized warm initialization method, which aims to reduce the number of bottlenecks by minimizing the occurrences of the initial outer loop.

In round 1, all signals 1052 are fed into an initial outer loop 950 in stage-1 1061. The results of this initial outer loop are stored in a file 1082. Fine-tuning operations 1072 are applied to the proxies and coefficients in stage-2 1071, and the output is a set of proxies and coefficients.

For round 2, the stored results (in the file 1082) from the initial outer loop of round 1 are used to initialize an initial outer loop 950 in stage-1 1063. This reduces the time required for the outer loop as it uses the previous results. The results are stored in a file 1084. Fine-tuning operations 1074 are applied to the proxies and coefficients in stage-2 1073.

Similarly, round 3 uses the stored results (stored in the file 1084) from round 2 to initialize the outer loop 950 in stage-1 1065. The results are stored in a file 1086, and the proxies and coefficients are fine-tuned in stage-2 1075.

By storing and reusing the results of the initial outer loop of the previous round, the second type of process reduces the number of bottlenecks to just one, significantly speeding up the training process. This method achieves a 5.01x speedup with only a minor precision drop.

The outer loop 950 in stage-1 1061, 1062, 1063 of the disclosed invention utilizes a pathwise coordinate optimization algorithm, specifically the PICASSO library, to select proxies for power model training.

More specifically, the initial outer loop 950 in stage-1 1061 is executed only once at the beginning of the training process. It starts with a large regularization parameter $\lambda$ and an empty active set. In particular, the strong rule is applied to preselect coordinates for the active set. Active coordinate minimization in operation 916 is performed iteratively over the coordinates in the active set. Active set updating in operation 918 is performed by adding coordinates from the inactive set that have a large absolute gradient value. The middle loop 956 (strong rule, active coordinate minimization, and active set updating) iterates until a convergence criterion is met. This criterion could be based on the change in the objective function value or the change in the active set. Once the middle loop 956 converges, the output solution in operation 920, including the information for finetuning such as selected proxies and their coefficients etc., is stored in a file 1082.

The subsequent outer loops 950 in stage-1 1063 and 1065 utilize the warm start initialization technique to accelerate the proxy selection process. Instead of starting from scratch, these outer loops utilize the output solution from the previous outer loop as the initialization. In particular, the output solution from the previous outer loop (stored in files 1082, 1084) is loaded and used as the initial solution for the current outer loop. The regularization parameter $\lambda$ is also updated, typically decreased, to encourage the selection of more proxies. The strong rule is applied again to preselect coordinates, but this time, it starts with the pre-populated active set from the previous iteration. Similarly to the outer loop in stage-1 1061, Active coordinate minimization in operation 916 and active set updating in operation 918 are performed. The middle loop 956 continues until convergence is achieved based on the defined criterion. The updated solution 920, including the selected proxies and their coefficients, is stored in a file (1084, 1086).

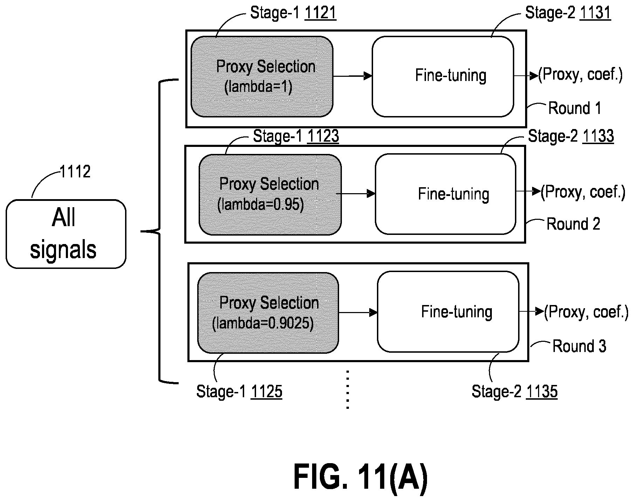

FIG. 11(A) is a diagram illustrating a first type of process for proxy selection and coefficient fine-tuning using a regularization path method. The first type of process involves running multiple rounds to obtain a power model 150. Each round includes a stage-1 for proxy selection and a stage-2 for coefficient fine-tuning.

In round 1, all signals 1112 are fed into stage-1 1121 for proxy selection with a regularization parameter $\lambda = 1$. The selected proxies and their coefficients are then passed to stage-2 1131 for fine-tuning. The output of round 1 is a set of proxies and their corresponding coefficients.

In round 2, the process starts again with stage-1 1123 for proxy selection, but this time with a slightly decreased regularization parameter $\lambda = 0.95$. The selected proxies and coefficients are then passed to stage-2 1133 for fine-tuning. The output of round 2 is another set of proxies and coefficients.

Similarly, round 3 begins with stage-1 1125 for proxy selection with a further decreased regularization parameter $\lambda = 0.9025$, followed by fine-tuning in stage-2 1135. The output of round 3 is yet another set of proxies and coefficients.

In this process, each round starts with a proxy selection stage, which is time-consuming and results in multiple bottlenecks throughout the training process.

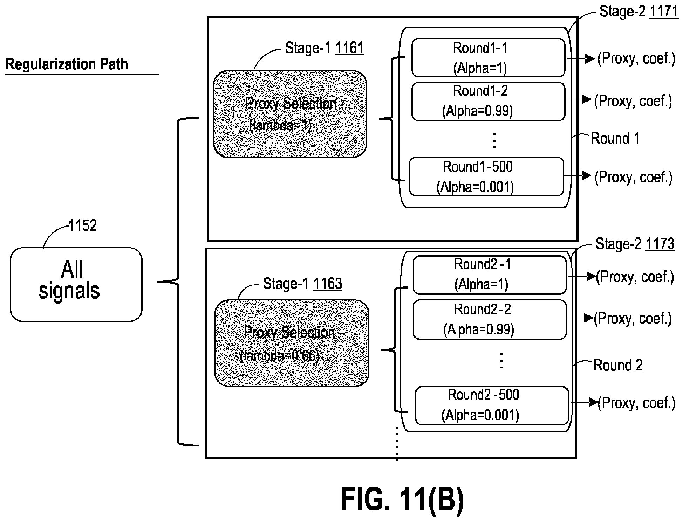

FIG. 11(B) illustrates a second type of process for proxy selection and coefficient fine-tuning using the regularization path method. This process aims to minimize the number of stage-1 proxy selection iterations by utilizing the regularization path and iteratively fine-tuning the coefficients in stage-2.

In round 1, all signals 1152 are fed into stage-1 1161 for proxy selection with a regularization parameter $\lambda = 1$. The selected proxies and their coefficients are then passed to stage-2 1171 for iterative fine-tuning. In stage-2 1171, the coefficients are fine-tuned in multiple subrounds (e.g., round 1-1, round 1-2, ...) using a sequence of decreasing coefficient scaling parameter $\alpha$ values (e.g., 1, 0.99, ..., 0.001). The output of each subround is a set of proxies and their corresponding fine-tuned coefficients for each $\alpha$ value.

For round 2, the process starts with stage-1 1163 for proxy selection, but with a significantly decreased regularization parameter $\lambda = 0.66$. This is possible because the coefficients have already been fine-tuned in stage-2 1171 of round 1. The selected proxies and coefficients are then passed to stage-2 1173 for another round of iterative fine-tuning using the same sequence of decreasing $\alpha$ values.

In certain scenarios, by utilizing the regularization path and iteratively fine-tuning the coefficients in stage-2, the second type of process reduces the number of stage-1 proxy selection iterations, possibly leading to a 2.32x speedup with only a minor precision drop compared to the first type of process.

The regularization path method addresses the bottleneck issue in the proxy selection and coefficient fine-tuning process. The stage-1 proxy selection is more time-consuming compared to stage-2 coefficient fine-tuning. Therefore, reducing the number of stage-1 iterations can significantly accelerate the overall training process.

The first type of process, illustrated in FIG. 11(A), performs proxy selection in each round with gradually decreasing regularization parameters. However, this approach still requires multiple stage-1 iterations, resulting in bottlenecks throughout the training process.

The second type of process, illustrated in FIG. 11(B), uses the regularization path and iterative fine-tuning in stage-2 to minimize the number of stage-1 iterations. By performing extensive coefficient fine-tuning in stage-2 using a sequence of decreasing $\alpha$ values, the process allows for a more aggressive decrease in the regularization parameter $\lambda$ in subsequent rounds of stage-1 proxy selection. This approach effectively reduces the number of stage-1 iterations, leading to a significant speedup in the overall training process.

The regularization parameter $\lambda$ controls the sparsity of the solution during the proxy selection process (Stage-1). A higher $\lambda$ enforces a sparser solution, resulting in fewer proxies being selected. $\lambda$ determines the trade-off between model complexity and accuracy. A larger $\lambda$ prioritizes a simpler model with fewer proxies (less hardware overhead) but potentially at the cost of slightly lower accuracy. A smaller $\lambda$ allows for a more complex model with more proxies, potentially achieving higher accuracy but with increased hardware overhead.

The $\alpha$ in Stage-2 (FIG. 11(B)) is a scaling factor of a penalty term which constrains the number of proxies. The higher value of $\alpha$ introduces higher penalty to use more proxy. The lower value of $\alpha$ introduces lower penalty to use more proxy.

In FIG. 11(B), the iterative fine-tuning with decreasing $\alpha$ values in Stage-2 allows for a more aggressive decrease of $\lambda$ in subsequent rounds. The extensive fine-tuning explores the solution space thoroughly, enabling the algorithm to confidently use a significantly smaller $\lambda$ in the next round, speeding up the overall training process.

As shown, in both FIGs. 11(A) and 11(B), the regularization parameter $\lambda$ is decreased in each subsequent round of proxy selection (Stage-1). A high value of $\lambda$ strongly penalizes the inclusion of many features (signals in this case) in the model. This leads to a very sparse solution, selecting only a few proxies that have the strongest correlation with power consumption. A low value of $\lambda$ relaxes this penalty, allowing more features into the model and resulting in a denser solution.

The algorithm begins with a large $\lambda$ to enforce sparsity and avoid overfitting, especially when dealing with millions of signals. As $\lambda$ decreases, the algorithm allows more signals (proxies) to be included in the model, gradually increasing the model's complexity and potentially its accuracy. The "warm start" initialization (operation 922 in FIG. 9) uses the solution from the previous round, making the optimization more efficient.

The input to the proxy selection stage in each round is the set of signals 1112 in FIG. 11(A) and the set of signals 1152 in FIG. 11(B). As explained in operation 922, the solution (selected proxies and their coefficients) from the previous round serves as the starting point for the current round's optimization. This makes the coordinate optimization converge faster. In FIG. 11(B), the intensive fine-tuning in Stage-2 allows for a more aggressive decrease in $\lambda$ for the subsequent Stage-1. The algorithm benefits from the knowledge gained in the previous rounds, enabling it to explore a wider range of proxy selections more efficiently.

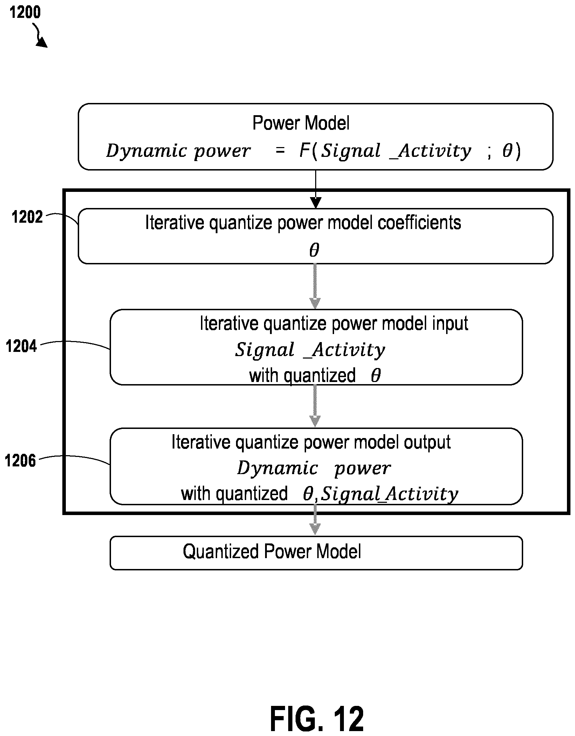

FIG. 12 is a flow chart 1200 of a process (method) for quantizing the power model 150 to reduce hardware cost for implementing the power model 150. Quantization is necessary to reduce the hardware cost of the power model 150. Quantizing all coefficients to integers may result in a significant reduction of hardware costs with minimal loss in accuracy. To further save hardware costs, the signal activity, which is the input of the power model 150, may also be quantized. The dynamic power, which is the output of the power model 150, is also quantized. Full search or sequential search can be used for all cases.

As described *supra*, the power model can be represented using the following equation:

$$Dynamic\ power = F(Signal\_Activity; \theta)$$

*Dynamic power* is the output of the power model, representing the estimated dynamic power consumption of the chip. *F* is a function that maps the input *Signal_Activity* and the model coefficients $\theta$ to the output *Dynamic power*. *Signal_Activity* is the input to the power model, representing the activity of a subset of signals within the chip. The signal activity can include $T_0$, $T_1$, and *TC* signals. $\theta$ represents the coefficients of the power model, which are learned during the training process using an AI algorithm. These coefficients determine the weight or importance of each signal activity in estimating the dynamic power consumption.

More specifically, in operation 1202, the quantization component 336 iteratively quantizes the power model coefficients $\theta$. The coefficients are quantized to a fixed number of bits, such as 8 bits. This reduces the hardware cost of storing and processing the coefficients. This quantization process may find the minimum number of bits required to represent the coefficients with minimal loss in accuracy.

In operation 1204, the quantization component 336 iteratively quantizes the power model input, *Signal_Activity,* using the quantized coefficients $\theta$ from operation 1202. The signal activity may, for example, include $T_0$, $T_1$, and *TC* signals. The signal activity is quantized to a fixed number of bits to reduce the hardware cost of the input interface and processing. The quantization process for the input may determine the minimum number of bits required to represent the signal activity with minimal loss in accuracy.

In operation 1206, the quantization component 336 iteratively quantizes the power model output, *Dynamic power*, using the quantized coefficients $\theta$ and quantized signal activity *Signal_Activity* from operations 1202 and 1204. The dynamic power output is quantized to a fixed number of bits to reduce the hardware cost of the output interface.

The quantization order of operations 1202, 1204, and 1206 may be arbitrary. The quantization component 336 may identify a predetermined number of bits (e.g., the minimum number) for each quantization operation that results in an acceptable precision drop. As such, the quantized power model 150 maintains sufficient accuracy while minimizing hardware cost.

The quantized power model 150 obtained after the quantization process has its coefficients, input signal activity, and output dynamic power represented with fewer bits compared to the original power model 150. This results in a significant reduction in hardware cost when implementing the power model 150, making it more feasible for integration into mobile chips and other resource-constrained devices.

The quantization process may use a full search or sequential search to determine the optimal bit-width for each component of the power model.

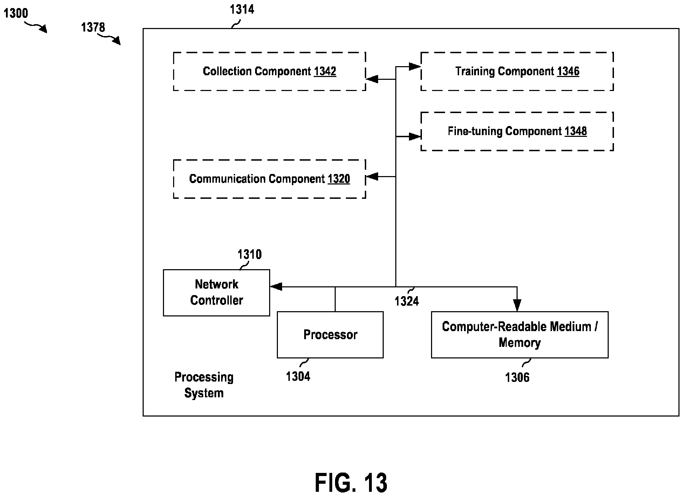

FIG. 13 is a diagram 1300 illustrating an example of a hardware implementation for an apparatus 1378 employing a processing system 1314. The apparatus 1378 may implement a collection component 1342, a training component 1346, and a fine-tuning component 1348. The processing system 1314 may be implemented with a bus architecture, represented generally by the bus 1324. The bus 1324 may include any number of interconnecting buses and bridges depending on the specific application of the processing system 1314 and the overall design constraints. The bus 1324 links together various circuits including one or more processors and/or hardware components, represented by a processor 1304, a network controller 1310, and a computer-readable medium / memory 1306. The bus 1324 may also link various other circuits such as timing sources, peripherals, voltage regulators, and power management circuits, which are well known in the art, and therefore, will not be described any further.

The processing system 1314 may be coupled to the network controller 1310. The network controller 1310 provides a means for communicating with various other apparatus over a network. The network controller 1310 receives a signal from the network, extracts information from the received signal, and provides the extracted information to the processing system 1314, specifically a communication component 1320 of the apparatus 1378. In addition, the network controller 1310 receives information from the processing system 1314, specifically the communication component 1320, and based on the received information, generates a signal to be sent to the network. The processing system 1314 includes a processor 1304 coupled to a computer-readable medium / memory 1306. The processor 1304 is responsible for general processing, including the execution of software stored on the computer-readable medium / memory 1306. The software, when executed by the processor 1304, causes the processing system 1314 to perform the various functions described supra for any particular apparatus. The computer-readable medium / memory 1306 may also be used for storing data that is manipulated by the processor 1304 when executing software. The processing system further includes the collection component 1342, the training component 1346, and the fine-tuning component 1348. The components may be software components running in the processor 1304, resident/stored in the computer readable medium / memory 1306, one or more hardware components coupled to the processor 1304, or some combination thereof.

The apparatus 1378 may include means for performing operations as described *supra* referring to FIGs. 10(A), 10(B), 11(A), 11(B), and 12. The aforementioned means may be one or more of the aforementioned components of the apparatus 1378 and/or the processing system 1314 of the apparatus 1378 configured to perform the functions recited by the aforementioned means.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for."

## Claims

1. A method for training a power model for estimating power consumption of a chip, the method comprising:

   collecting a plurality of data samples, each data sample representing a signal activity of a plurality of signals of the chip;
   selecting a subset of signals from the plurality of signals as proxies that are correlated with an actual power consumption of the chip according to a criterion;
   training the power model using signal activities of the plurality of signals as inputs and the actual power consumption as an output; and
   fine-tuning coefficients of the proxies in the power model to adjust an estimation error between an estimated power consumption output by the power model and the actual power consumption.

2. The method of claim 1, wherein collecting the plurality of data samples comprises:

   obtaining a T1 array of the plurality of signals from the chip, the T1 array representing that one or more signals are at a high voltage level at one or more time points;
   applying a dimension reduction method to the T1 array to obtain a plurality of embeddings;
   applying a clustering method to the plurality of embeddings to obtain orthogonal clusters; and
   applying a sampling rule to the orthogonal clusters to obtain an orthogonal minimum dataset.

3. The method of claim 2, wherein the T1 array is obtained from a Performance Monitoring Unit, in the following also referred to as PMU, of the chip.

4. The method of claim 2 or 3, wherein the sampling rule is based on a group size.

5. The method of any one of claims 2 to 4, further comprising:
   performing similarity filtering on the orthogonal clusters to remove highly similar data points within each cluster.

6. The method of claim 5, wherein performing similarity filtering comprises:

calculating a similarity between every pair of data points within each cluster;
concatenating signal activities for each data point in the pair into a 1D array;
calculating the similarity between the two 1D arrays; and
removing one of the two data points if the similarity is above a threshold.

7. The method of any one of claims 1 to 6, wherein selecting the subset of signals as proxies comprises:
applying a bottom-up strategy to sequentially select proxies and propagate the selections to a next level until an entire design of the chip is processed.

8. The method of claim 7, wherein applying the bottom-up strategy comprises:

starting proxy selection from a deepest level of a design hierarchy of the chip;
combining selected proxies from a current level with signals from a next level up in the design hierarchy; and
performing another round of proxy selection using the combined signals.

9. The method of any one of claims 1 to 8, wherein selecting the subset of signals as proxies comprises:
applying an optimization algorithm to select the proxies, the optimization algorithm comprising:

performing active coordinate minimization over coordinates in an active set;
applying a strong rule to preselect coordinates for the active set;
updating the active set by adding coordinates from an inactive set having a largest absolute gradient value; and
performing warm start initialization using a solution from a previous iteration as a starting point for a current iteration.

10. The method of any one of claims 1 to 9, wherein training the power model comprises:

performing a first stage comprising selecting the subset of signals as proxies using a regularization parameter; and
performing a second stage comprising iteratively fine-tuning the coefficients of the proxies using a coefficient scaling parameter,
wherein the regularization parameter is decreased for one or more iterations of the first stage, and
wherein the coefficient scaling parameter is decreased for a plurality of sub-iterations of the second stage corresponding to each iteration of the first stage.

11. The method of any one of claims 1 to 10, wherein training the power model comprises:

performing multiple rounds of training, each round including a first stage for proxy selection and a second stage for coefficient fine-tuning;
in the first stage, storing results of an initial outer loop of proxy selection in a file; and
in the second stage, loading the stored results and performing coefficient fine-tuning.

12. The method of any one of claims 1 to 11, wherein fine-tuning the coefficients of the proxies comprises:

performing multiple rounds of training, each round including a first stage for proxy selection and a second stage for coefficient fine-tuning;
in the first stage, decreasing a regularization parameter in each subsequent round; and
in the second stage, iteratively fine-tuning the coefficients using a sequence of decreasing coefficient scaling parameters.

13. The method of any one of claims 1 to 12, further comprising:

quantizing coefficients of the power model to integers;
quantizing signal activities used as inputs to the power model; and
quantizing power values output by the power model.

14. A computing device for training a power model for estimating power consumption of a chip, comprising:

a memory (1306); and

at least one processor (1304) coupled to the memory (1306) and configured to perform the method steps as defined in any one of claims 1 to 13.

15. A computer-readable medium storing computer executable code for operation of a computing device, comprising code to perform the method steps as defined in any one of claims 1 to 13.

100

Chip 110

Signal 120-1
Signal 120-2
Signal 120-3
Signal 120-4
Signal 120-5

Signal 120-(n-1)
Signal 120-n

Power Model 150

FIG. 1

**200**

**FIG. 2**

**Data Related**

Design Signals 312 → Data Collection 314 (Minimum Dataset) → **Reduce** number of PTPX → Data Preprocess 316 (Similarity Filtering   )

Remove high similar data

**Power Model Constructor**

Proxy Selection 332 (PICASSO Lib) (Maximize Warm Initialization) → **Reduce** Proxy selection time → Coefficient Finetune 334 (Regularization Path) → Quantization 336

Quantize model's coefficient, signal activity and power to **less bit**

On-chip Power Model 350

**FIG. 3**

300

Fig. 4(A)

Fig. 4(B)

500

| 402 | | 404 | | 406 | | 508 | | 410 |
|---|---|---|---|---|---|---|---|---|
| PMU signals' T1 array | Dimension Reduction Methods | PMU Embedding | Clustering | Orthogonal Clusters | | Similarity Filtering | Remove high similar data on each clustering | Orthogonal Minimum Dataset |

# FIG. 5

600

602

Obtain all signals' arrays | Calculate similarity between each pair of data →

604

Similarity > Threshold ?

606

Randomly remove one of data

608

Filtered data w/o high similar data

**FIG. 6**

**FIG. 7(A)**

**FIG. 7(B)**

800

810

820

830

840

Proxy Group 2
Proxy Group 1

Proxy Group 2
Proxy Group 1
Proxy Group 3

Proxy Group 4

Proxy Group 5

# FIG. 8

900

912

Outer loop 950

Regularization parameter
initialization

956 Middle loop

922 Warm start
initialization

914 Strong rule

New regularization
parameter

Initial
active set

960 Inner loop

Coordinate
updating

Active coordinate
minimization 916

Initial
solution

Convergence    New active set

Active set
updating 918

Convergence

Output
solution 920

**FIG. 9**

FIG. 10(A)

**Maximize Warm Initialization**

FIG. 10(B)

FIG. 11(A)

**Regularization Path**

Stage-2 <u>1171</u>

Stage-1 <u>1161</u>

Proxy Selection
(lambda=1)

Round1-1
(Alpha=1)
(Proxy, coef.)

Round1-2
(Alpha=0.99)
(Proxy, coef.)

Round 1

Round1-500
(Alpha=0.001)
(Proxy, coef.)

1152

All
signals

Stage-2 <u>1173</u>

Stage-1 <u>1163</u>

Proxy Selection
(lambda=0.66)

Round2-1
(Alpha=1)
(Proxy, coef.)

Round2-2
(Alpha=0.99)
(Proxy, coef.)

Round 2

Round2-500
(Alpha=0.001)
(Proxy, coef.)

# FIG. 11(B)

**1200**

Power Model
$$Dynamic\ power\ =\ F(Signal\_Activity\ ;\ \theta)$$

1202 — Iterative quantize power model coefficients
$\theta$

1204 — Iterative quantize power model input
$Signal\_Activity$
with quantized $\theta$

1206 — Iterative quantize power model output
$Dynamic\ power$
with quantized $\theta, Signal\_Activity$

Quantized Power Model

**FIG. 12**

**1300**

**1378**

**1314**

Collection Component **1342**

Training Component **1346**

Fine-tuning Component **1348**

Communication Component **1320**

**1310**

Network
Controller

Processor

**1324**

Computer-Readable Medium /
Memory

Processing
System

**1304**

**1306**

FIG. 13

## EUROPEAN SEARCH REPORT

Europäisches
Patentamt
European
Patent Office
Office européen
des brevets

**Application Number**

EP 24 18 8638

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIE ZHIYAO ET AL: "APOLLO: An Automated Power Modeling Framework for Runtime Power Introspection in High-Volume Commercial Microprocessors", PROCEEDINGS OF THE 1ST WORKSHOP ON DIGITAL TWIN & EDGE AI FOR INDUSTRIAL IOT, 18 October 2021 (2021-10-18), pages 1-14, XP058992648, DOI: 10.1145/3466752.3480064 | 1,3, 10-15 | INV. G06F30/27 ADD. G06F119/06 |
| Y | * the whole document * * abstract * * section 4 * * section 4.1 * * section 4.3 * * section 6 * * section 7.1 * | 2,4-9 | |
| Y | KIM DONGGYU DGKIM: "Simmani Runtime Power Modeling for Arbitrary RTL with Automatic Signal Selection", PROCEEDINGS OF THE 52ND ANNUAL IEEE/ACM INTERNATIONAL SYMPOSIUM ON MICROARCHITECTURE, 12 October 2019 (2019-10-12), pages 1050-1062, XP058476991, DOI: 10.1145/3352460.3358322 | 2,4-6 | |
| A | * the whole document * * abstract * * sections 3.3 and 3.4 * | 1,3,7-15 | |

TECHNICAL FIELDS SEARCHED (IPC)

G06F
G06N
G01R

-/--

The present search report has been drawn up for all claims

| Place of search | Date of completion of the search | Examiner |
|---|---|---|
| Munich | 12 November 2024 | Rungger, Matthias |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
............................................................................
& : member of the same patent family, corresponding
   document

EPO FORM 1503 03.82 (P04C01)

page 1 of 2

Europäisches Patentamt

European Patent Office

Office européen des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIE ZHIYAO ET AL: "DEEP Developing Extremely Efficient Runtime On-Chip Power Meters", PROCEEDINGS OF THE 22ND ACM INTERNATIONAL CONFERENCE ON INTELLIGENT VIRTUAL AGENTS, 30 October 2022 (2022-10-30), pages 1-9, XP059266538, DOI: 10.1145/3508352.3549427 | 7,8 | |
| A | * the whole document * <br> * abstract * <br> * algorithm 2 * <br> * section 3.3 * | 1-6,9-15 | |
| Y,D | ZHAO TUO ET AL: "Pathwise coordinate optimization for sparse learning: Algorithm and theory", THE ANNALS OF STATISTICS, vol. 46, no. 1, 1 February 2018 (2018-02-01), XP093223039, DOI: 10.1214/17-AOS1547 | 9 | |
| A | * the whole document * <br> * abstract * <br> * figure 2 * <br> * equation (1.1) * | 1-8, 10-15 | **TECHNICAL FIELDS SEARCHED (IPC)** |
| A | XIE ZHIYAO: "Efficient Runtime Power Modeling with On-Chip Power Meters", PROCEEDINGS OF THE 23RD INTERNATIONAL MIDDLEWARE CONFERENCE DOCTORAL SYMPOSIUM, 26 March 2023 (2023-03-26), pages 168-174, XP059053981, DOI: 10.1145/3569052.3578927 <br> * the whole document * <br> * abstract * <br> * section 3 * | 1-15 | |

The present search report has been drawn up for all claims

| Place of search | Date of completion of the search | Examiner |
|---|---|---|
| Munich | 12 November 2024 | Rungger, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63513902

**Non-patent literature cited in the description**

- **ZHAO, T.** ; **LIU, H.** ; **ZHANG, T.** Pathwise coordinate optimization for sparse learning: Algorithm and theory. *arXiv: 1412.7477*, 09 February 2017